# FASCICULE DE BREVET EUROPEEN

(11) **EP 4 198 779 B1**
(45) Date de publication et mention de la délivrance du brevet: **14.10.2026**
(21) Numéro de dépôt: 22214089.9
(22) Date de dépôt: 16.12.2022
(51) Int. Cl.: G06F 21/55, H04L 9/40

(54) **PROCÉDÉ DE CONFIGURATION D'UN SYSTÈME DE DÉTECTION D'INTRUSION DANS UN RÉSEAU DE COMMUNICATION, PROCÉDÉ DE DÉTECTION, ARCHITECTURE ET ENSEMBLE ASSOCIÉS**
VERFAHREN ZUR KONFIGURATION EINES EINDRINGUNGSERKENNUNGSSYSTEMS IN EINEM KOMMUNIKATIONSNETZWERK, DETEKTIONSVERFAHREN, ARCHITEKTUR UND ANORDNUNG DAFÜR
METHOD FOR CONFIGURING A SYSTEM FOR DETECTING INTRUSION IN A COMMUNICATION NETWORK, ASSOCIATED DETECTION METHOD, ARCHITECTURE AND ASSEMBLY

(30) Priorité: 17.12.2021 FR 2113766
(43) Date de publication de la demande: 21.06.2023
(73) Titulaire: THALES, 92400 Courbevoie (FR)
(72) Inventeur: LE FOLL, Hervé, 92622 GENNEVILLIERS CEDEX (FR); DELMAS, Quentin, 78141 VELIZY CEDEX (FR); FONTARENSKY, Ivan, 78141 VELIZY CEDEX (FR)
(74) Mandataire: Lavoix

(56) Documents cités:
- US-A1- 2006 101 511
- US-A1- 2008 010 680
- US-A1- 2020 389 472
- US-B1- 11 126 415

## Description

La présente invention concerne un procédé de configuration d'un système de détection d'intrusion dans un réseau de communication.

L'invention concerne également un procédé de détection d'une intrusion dans un réseau de communication comprenant la mise en œuvre d'un tel procédé de configuration.

L'invention concerne également une architecture de configuration d'un système de détection d'intrusion dans un réseau de communication.

L'invention concerne aussi un ensemble comprenant un système de détection et une architecture de configuration de ce système de détection.

L'invention se situe dans le domaine de la sécurité informatique, également appelé cyber sécurité.

Le document US 2006/0101511 A1 décrit un système dynamique et un procédé pour sécuriser un réseau de communication en utilisant des agents portables.

Des systèmes de détection d'intrusion dans un réseau de communication sont connus dans l'état de la technique. De tels systèmes permettent en général de détecter des anomalies dans des paquets ou des flux transmis dans le réseau de communication.

Pour cela, on connait par exemple des systèmes de détection mettant en œuvre une approche comportementale consistant à détecter des anomalies d'activité du réseau de communication en comparaison à un comportement nominal, défini par un administrateur.

On connait également des systèmes de détection mettant en œuvre une approche par scénario basée sur des signatures. De tels systèmes sont configurés pour rechercher, dans l'activité surveillée du réseau de communication, des signatures d'attaques prédéfinies, selon des protocoles de communication, et correspondant à des règles de détection selon ces protocoles de communication.

Pour continuer à assurer une détection fiable d'attaques par un tel système mettant en œuvre la détection sur la base de signatures, le système est régulièrement mis à jour afin de prendre en compte des nouvelles signatures d'attaques selon des protocoles de communication spécifiques.

Cette mise à jour nécessite alors une modification des règles de détection au sein du système de détection.

Or, la modification des règles de détection est souvent complexe et requiert notamment une parfaite compréhension du fonctionnement du système de détection.

Un but de la présente invention est alors de proposer un procédé de configuration d'un système de détection permettant de faciliter la mise à jour de protocoles de communication et de règles de détection d'intrusion selon ces protocoles de communication du système de détection.

À cet effet, l'invention a pour objet un procédé de configuration selon la revendication 1.

Le procédé de configuration permet en effet de configurer le système de détection de manière simple, en ajoutant le module additionnel de détection notamment sans connaissance du langage de programmation prédéfini par le système de détection. En effet, le procédé de configuration permet par exemple à un opérateur de définir le module additionnel de détection via la grammaire, et ainsi d'obtenir l'ajout du module additionnel de détection au système de détection pour permettre une détection d'intrusions selon un protocole de communication spécifique au module additionnel de détection, ainsi que les règles de détection liées.

Suivant d'autres aspects avantageux de l'invention, le procédé de configuration est selon l'une quelconque des revendications 2 à 6.

L'invention a aussi pour objet un procédé de détection selon la revendication 7.

Suivant d'autres aspects avantageux de l'invention, le procédé de détection est selon l'une quelconque des revendications 8 à 10.

L'invention a en outre pour objet une architecture de configuration selon la revendication 11.

L'invention a en outre pour objet un ensemble selon la revendication 12.

Ces caractéristiques et avantages de l'invention apparaitront à la lecture de la description qui va suivre, donnée uniquement à titre d'exemple non limitatif, et faite en référence aux dessins annexés, sur lesquels :
- [Fig 1] la figure 1 est une vue schématique d'un ensemble comprenant un réseau de communication, un système de détection et une architecture de configuration selon l'invention, et
- [Fig 2] la figure 2 est un ordinogramme d'un procédé de détection d'un système de détection d'intrusion dans un réseau de communication.

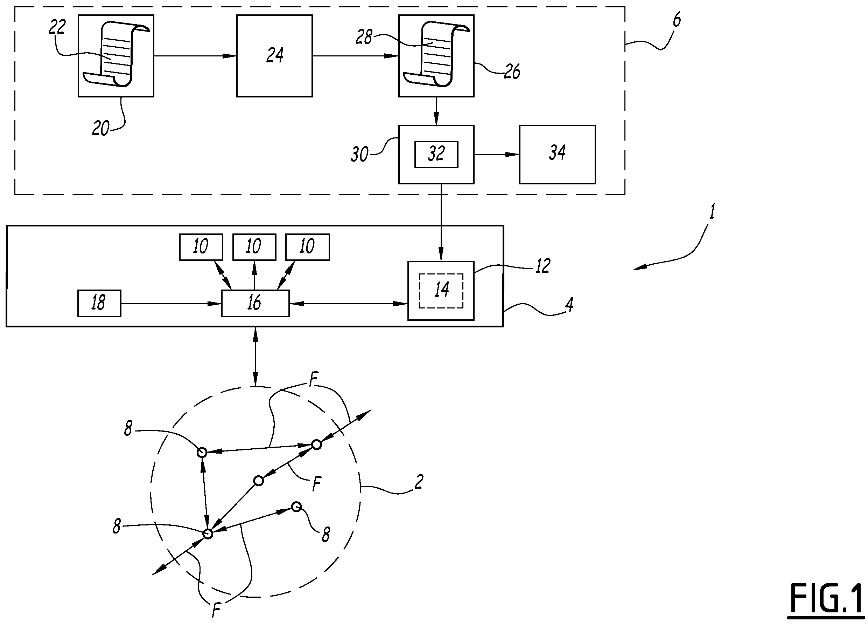

Sur la figure 1, un ensemble 1 comprend un réseau de communication 2, un système de détection 4 et une architecture de configuration 6.

Le réseau de communication 2 comprend une pluralité de noeuds 8 configurés pour mettre en œuvre des flux de communication F entre eux et/ou avec l'extérieur du réseau de communication 2.

Le système de détection 4 est configuré pour détecter des intrusions dans le réseau de communication 2.

Par « intrusion », il est entendu une activité non autorisée du réseau de communication 2, par exemple un accès à des ressources du réseau de communication 2, telles que des données, par une entité qui n'est pas autorisée à cet accès.

Le système de détection 4 comprend par exemple une pluralité de modules de détection 10. Chaque module de détection 10 est configuré pour détecter des intrusions dans le réseau de communication 2 selon un protocole de communication spécifique à ce module de détection 10.

Par « protocole de communication », il est entendu la définition de fonctionnement des échanges des noeuds 8 du réseau de communication 2.

Le système de détection 4 comprend en outre un module de librairie 12 configuré pour recevoir au moins un module de détection à ajouter, dit module additionnel de détection 14, sous forme d'un code exécutable par le système de détection 4.

Le système de détection 4 comprend en outre un module d'exécution 16 configuré pour exécuter chaque module de détection 10 et chaque module additionnel de détection 14. Le module d'exécution 16 forme en particulier un environnement d'exécution des modules 10, 14, et est notamment dénommé « runtime » en anglais.

Le système de détection 4 comprend en outre un module d'interface générique 18 configuré pour charger le module additionnel de détection 14 dans le module d'exécution 16 pour une exécution de ce module 14.

Chaque module de détection 10, le module de librairie 12, le module d'exécution 16 et le module d'interface générique 18 sont chacun par exemple intégrés dans au moins un calculateur.

Dans ce cas, chacun des modules parmi chaque module de détection 10, le module de librairie 12, le module d'exécution 16 et le module d'interface générique 18 se présente au moins partiellement sous la forme d'un logiciel exécutable par un processeur et stocké dans une mémoire du calculateur.

L'architecture de configuration 6 est apte à configurer le système de détection 4. En particulier, l'architecture de configuration 6 est configuré pour ajouter au moins un module additionnel de détection 14 au système de détection 4.

L'architecture de configuration 6 comprend un module de réception 20 d'une grammaire 22 pour le module additionnel de détection 14.

L'architecture de configuration 6 comprend par exemple en outre un module de validation 24 configuré pour valider la grammaire 22 par mise en œuvre d'au moins un test selon des règles prédéterminées.

L'architecture de configuration 6 comprend en outre un module de génération 26 configuré pour générer, en fonction de la grammaire 22, un fichier 28.

L'architecture de configuration 6 comprend en outre un module de compilation 30 comprenant un compilateur 32 configuré pour compiler le fichier 28, pour obtenir le module additionnel de détection 14 sous forme du code exécutable par le système de détection 4.

Le compilateur 32 est apte à compiler uniquement des fichiers dans ledit langage de programmation prédéfini, pour obtenir le code exécutable par le système de détection 4.

L'architecture de configuration 6 comprend en outre par exemple un module de simulation 34 configuré pour exécuter le module additionnel de détection 14, notamment sans mise en œuvre du module 14 par le système de détection 4.

Le module de validation 24 et/ou le module de simulation 34 est(sont) un(des) module(s) optionnel(s).

Le module de réception 20, le module de validation 24, le module de génération 26, le module de compilation 30 et le module de simulation 34 sont chacun par exemple intégrés dans au moins un calculateur.

Dans ce cas, chacun des modules parmi le module de réception 20, le module de validation 24, le module de génération 26, le module de compilation 30 et le module de simulation 34 se présente au moins partiellement sous la forme d'un logiciel exécutable par un processeur et stocké dans une mémoire du calculateur.

Selon un exemple, chacun des modules 20, 24, 26, 30 et 34 est intégré dans le même calculateur que chaque module de détection 10, le module de librairie 12, le module d'exécution 16 et le module d'interface générique 18.

En variante, chacun des modules 20, 24, 26, 30 et 34 est intégré dans un calculateur distinct d'un calculateur intégrant les modules 10, 12, 16 et 18.

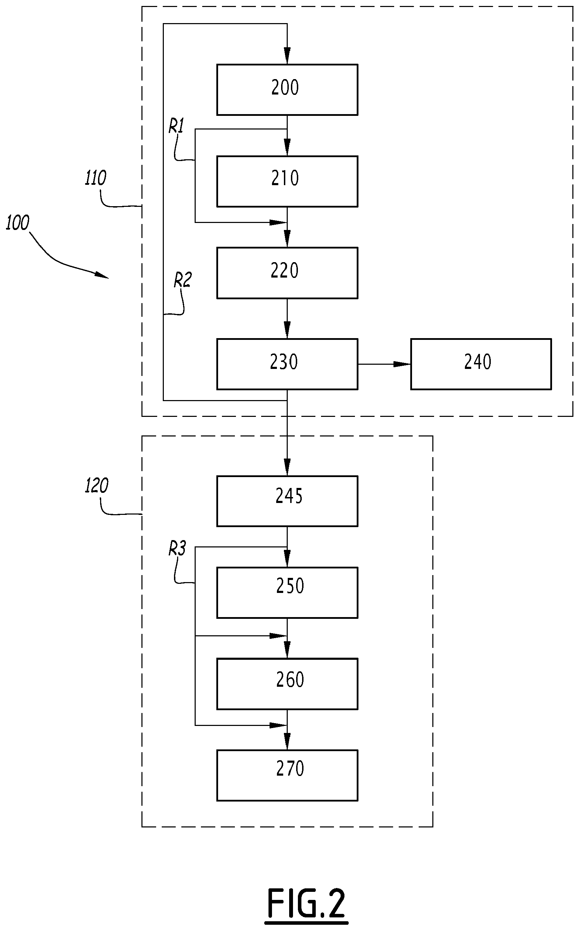

Un procédé de détection 100 d'une intrusion dans le réseau de communication 2 est maintenant décrit en référence à la figure 2.

Le procédé de détection 100 comprend une phase de configuration 110 du système de détection, mise en œuvre en particulier par l'architecteur de configuration 6, et une phase d'exploitation 120 mise en œuvre en particulier par le système de détection 4.

La phase de configuration 110 permet en particulier d'ajouter le module additionnel de détection 14 au système de détection 4.

La phase de configuration 110 comprend une étape de réception 200, une étape de validation 210, une étape de génération 220, une étape de compilation 230 et une étape de simulation 240.

Lors de l'étape de réception 200, le module de réception 20 reçoit la grammaire 22 pour le module additionnel de détection 14.

La grammaire 22 définit le protocole de communication spécifique au module additionnel de détection 14 et un ensemble de règles de détection d'intrusions pour le module additionnel de détection 14 selon le protocole de communication spécifique à ce module 14.

Par « ensemble de règles de détection d'intrusions pour le module additionnel de détection selon le protocole de communication spécifique à ce module », il est notamment entendu des règles de détection qui sont liées à ce protocole de communication, et/ou qui sont définies en fonction d'une logique de ce protocole de communication.

En particulier, la grammaire 22 adresse toutes les caractéristiques du protocole de communication spécifique au module de détection additionnel 14.

Par exemple, la grammaire 22 définit une syntaxe du protocole de communication spécifique.

Par exemple, la grammaire 22 définit, dans le protocole de communication spécifique au module 14, l'ensemble de règles de détection permettant la détection d'une intrusion dans le réseau de communication 2.

La grammaire 22 est notamment non compilable par le compilateur 32.

La grammaire 22 est par exemple défini selon le langage formel appelé « Parsing Expression Grammar ».

La grammaire 22 comprend par exemple un ensemble de champs selon le protocole de communication spécifique au module additionnel de détection 14. Chaque champ définit en particulier une caractéristique de l'un des noeuds 8 du réseau de communication 2 et/ou une caractéristique de l'un des flux de communication F du réseau de communication 2 selon ce protocole de communication.

Dans l'exemple de la grammaire 22 décrit ci-dessous, chaque champ est notamment désigné par une variable appelée ELEMENTS.

La grammaire 22 comprend par exemple une section de métadonnées, une section de présélection (ou « peek section » de l'anglais section de coup d'oeil), et au moins une section de paquet.

La section de métadonnées comprend par exemple le protocole de communication spécifique au module additionnel de détection 14, tel que HTTP (de l'anglais « Hypertext Transfer Protocol » pour protocole de transfert hypertexte) ou AFTN (de l'anglais « Aeronautical Fixed Telecommunication Network » pour Réseau fixe de télécommunications aéronautiques).

La section de métadonnées comprend en outre par exemple un protocole de réseau, tel que UDP (de l'anglais « User Datagram Protocol » pour protocole de datagramme utilisateur) ou TCP (de l'anglais « Transmission Control Protocol » pour protocole de contrôle de transmissions).

La section de métadonnées comprend en outre par exemple des ports à surveiller. Par exemple, la section de métadonnées est définie comme suit :

```
       metadata {
       parser_name = http
       ip_proto = UDP
       ports = 80,443
       version = 0.1.0
       }
```

La section de présélection comprend par exemple une seule règle parmi l'ensemble de règles de détection, définissant si un flux de communication F donné est analysé par le module additionnel de détection 14 obtenu à partir de la grammaire 22.

Un exemple de la section de présélection est indiqué ci-après :

```
       peek {
       peek = {"ZCZC" }
       }
```

Dans cet exemple, la grammaire 22 pour le module additionnel de détection 14 définit que ce module 14 analyse un flux de communication F donné lorsque ce flux présente une caractéristique correspondant à une règle grammaire prédéfinie.

La section de paquet comprend par exemple une partie comprenant l'ensemble de règles de détection d'intrusions et une partie comprenant des instructions concernant des fichiers log à générer par le système de détection 4 lors de l'exécution du module additionnel de détection 14.

Un exemple de la partie comprenant l'ensemble de règles de détection d'intrusions est indiqué ci-après :

```
       rules {
       aftn_packet = { heading }
       heading = { heading_line ~ message} as ascii string
       heading_line = { start_of_message & " " & transmission_identification
       transmission_identification = { (!(" ") & alphanumeric)+ }
       additional_service_indication = { (!(" ") & alphanumeric)+
       address = { alphanumeric+ }
       origin = { alphanumeric+ }
       message = {ANY+} as ascii string
       alphanumeric = {'a'..'z'|'0'..'9'|'A'..'Z'}
       start_of_message = { "ZCZC" }
       }
```

Chaque règle de l'ensemble de règles de détection présente par exemple la syntaxe suivant :
RULENAME = {ELEMENTS} STORAGE, où
RULENAME est un nom de la règle de détection, unique dans cette section de paquet de la grammaire 22 ;
ELEMENTS comprend un ou plusieurs champs selon le protocole de communication du module additionnel de détection 14 ;
STORAGE est un élément optionnel, et définit un format et/ou un type d'une variable du/des champ(s).

Chaque champ de la partie ELEMENTS forme l'une des règles de détection du protocole de communication.

Chaque champ est par exemple un élément appartenant à la liste suivante : une chaîne de caractères ; des octets ; une condition d'alternative (par exemple : a OU b) ; une inversion, une gamme ; une suite de nœuds 8 en communication entre eux ; une taille d'un élément ; un nombre d'éléments.

Bien entendu, d'autres champs peuvent être envisagés.

Lors de l'étape de validation 210, le module de validation 24 valide la grammaire 22 pour le module additionnel de détection 14 par la mise en œuvre d'au moins un test selon des règles prédéterminées.

Par exemple, le module de validation 24 vérifie si la grammaire 22 comprend uniquement, dans la partie ELEMENTS de sa syntaxe, des champs compris dans une liste prédéfinie.

L'étape de validation 210 est une étape optionnelle, et selon un exemple, l'étape de génération 220 est mise en œuvre directement à la suite de la mise en œuvre de l'étape de réception 200. Cela est illustré sur la figure 2 par le raccourci R1.

Lors de l'étape de génération 220, le module de génération 26 génère, en fonction de la grammaire 22, le fichier 28.

Le fichier 28 comprend le protocole de communication spécifique au module additionnel de détection 14 et l'ensemble de règles de détection d'intrusions.

Le fichier 28 se présente dans un langage de programmation prédéfini par le système de détection 4, par exemple le langage de programmation Rust.

Le fichier 28 est distinct de la grammaire 22.

Le fichier 28 en langage de programmation Rust est en particulier compatible avec une intégration dans le système de détection 4.

Lors de l'étape de compilation 230, le compilateur 32 du module de compilation 30 compile le fichier 28, pour obtenir le module additionnel de détection 14 sous forme d'un code exécutable par le système de détection 4 permettant au système de détection 4 de détecter des intrusions dans le réseau de communication 2 selon le protocole de communication spécifique au module additionnel de détection 14.

Le module additionnel de détection 14 présente par exemple une structure logicielle analogue à celle de chacun des modules de détection 10.

Le module additionnel de détection 14 est spécifiquement adapté à la détection des intrusions dans le réseau de communication 2 selon le protocole de communication spécifique à ce module additionnel de détection 14, et selon l'ensemble de règles de détection d'intrusions selon le protocole de communication spécifique à ce module 14.

Le module additionnel de détection 14 est notamment enregistré sous forme de code binaire.

Le module additionnel de détection 14 comprend par exemple un interpréteur apte à détecter des mots prédéfinis à l'intérieur d'une chaîne de caractères d'au moins l'un des flux de communication F selon le protocole de communication spécifique au module additionnel de détection 14.

L'interpréteur est également appelé analyseur syntaxique (ou « parser » en anglais).

En référence à l'exemple de la grammaire 22 décrit ci-dessus, l'interpréteur détecte chaque flux de communication F comprenant un début de message égale au mot « ZCZC ».

Le module additionnel de détection 14 comprend, selon un exemple, un décodeur protocolaire qui est apte à détecter, dans l'ensemble de flux de communication F selon le protocole de communication spécifique au module additionnel de détection 14, une structure d'échange.

La structure d'échange est par exemple une fréquence et une durée d'échange.

Le décodeur protocolaire est par exemple en outre apte à détecter un contenu prédéterminé dans l'ensemble de flux de communication F, par exemple une chaîne de caractères.

Le module de compilation 30 émet le module additionnel de détection 14 au module de simulation 34 et/ou au module de librairie 12.

Le module additionnel de détection 14 est par exemple enregistré dans le module de librairie 12, par exemple sous forme de code binaire exécutable par le système de détection 4.

Selon un exemple, le module additionnel de détection 14 est enregistré sous forme de code binaire dans le module de simulation 34.

Lors de l'étape de simulation 240, le module de simulation 34, distinct du système de détection 4, exécute le module additionnel de détection 14. Le module de simulation 34 comprend la simulation d'une capacité du module additionnel de détection 14 de détecter une intrusion dans le réseau de communication 2.

Par exemple, le module de simulation 34 génère une intrusion correspondant à l'une des règles de détection du module 14, et vérifie si le module 14 détecte l'intrusion ou non.

Par exemple, le module de simulation 34 affiche, sur un dispositif d'affichage non représenté, une défaillance de la capacité de détecter l'intrusion du module 14 ou un succès de la détection.

L'étape de simulation 240 est une étape optionnelle.

Selon un exemple, l'étape de réception 200, éventuellement l'étape de validation 210, l'étape de génération 220, l'étape de compilation 230 et éventuellement l'étape de simulation 240 sont répétées pour un autre module de détection à ajouter au système de détection, distinct dudit module additionnel de détection 14. Cela est notamment illustré par la flèche R2 sur la figure 2.

La phase d'exploitation 120 est de préférence mise en œuvre après au moins une mise en œuvre de la phase de configuration 110.

La phase d'exploitation 120 comprend une étape de chargement 245, une étape de décompression 250, une étape de déchiffrage 260 et une étape d'analyse 270.

Lors de l'étape de chargement 245, le module d'interface générique 18 charge le module additionnel de détection 14 dans le module d'exécution 16 pour une exécution du module additionnel de détection 14.

Le module d'interface générique 18 charge le module additionnel de détection 14 de préférence en l'absence d'une recompilation la pluralité de modules de détection 10 autres que le module 14.

Lors de l'étape de décompression 250, le module additionnel de détection 14 décompresse un flux compressé de l'ensemble de flux de communication F pour obtenir un flux décompressé. Le flux compressé est par exemple compressé selon la technique zip ou gzip.

Lors de l'étape de déchiffrage 260, le module additionnel de détection 14 déchiffre un flux chiffré de l'ensemble de flux de communication F pour obtenir un flux déchiffré. Le flux chiffré est par exemple chiffré selon le protocole de sécurisation SSL (de l'anglais « Secure Sockets Layer » pour Couche de Sockets Sécurisée).

Lors de l'étape d'analyse 270, le système de détection 4 analyse l'ensemble de flux de communication F du réseau de communication 2.

Notamment, chaque module de détection 10 et le module additionnel de détection 14 analysent l'ensemble de flux de communication F en détectant des intrusions dans le réseau de communication 2 selon le protocole de communication spécifique à ce module 10, 14.

En particulier, le module additionnel de détection 14 détecte les intrusions selon les règles de détection d'intrusions selon le protocole de communication spécifique audit module additionnel de détection. Ces règles sont définies par la grammaire 22.

Lorsque le procédé 100 comprend l'étape de décompression 250, l'étape d'analyse 270 comprend l'analyse du flux décompressé par la pluralité de modules de détection 10 et par le module additionnel de détection 14.

Lorsque le procédé 100 comprend l'étape de déchiffrage 260, l'étape d'analyse 270 comprend l'analyse du flux déchiffré par la pluralité de modules de détection 10 et par le module additionnel de détection 14.

Les étapes de décompression 250 et de déchiffrage 260 sont des étapes optionnelles comme illustré par la flèche R3 sur la figure 2. En l'absence des étapes 250 et 260, l'étape d'analyse 270 est mise en œuvre directement à la suite de la mise en œuvre de l'étape de chargement 245.

On conçoit que le procédé de configuration et l'architecture de configuration 6 présentent un grand nombre d'avantages.

Le procédé de configuration permet de simplifier l'ajout du module additionnel de détection 14, car un opérateur définit le module additionnel de détection 14 via la grammaire 22, et le procédé de configuration permet alors d'ajouter le module 14 sur la base de la grammaire 22.

L'opérateur n'a donc pas besoin de connaitre le langage de programmation Rust, spécifique au système de détection 4, pour ajouter le module 14.

Aussi, du fait que, selon un exemple du procédé de l'invention, le module d'interface générique 18 charge le module 14 sans mettre en œuvre une recompilation de l'ensemble des modules 10, l'ajout du module 14 au système de détection 4 est facilité.

En particulier, cela permet d'ajouter le module 14 de manière indépendante des autres modules 10, et conduit alors à une absence de la nécessité d'une requalification, selon des règles de sécurité prédéterminées, des autres modules 10. Une telle requalification est par exemple nécessaire lors d'une recompilation de l'ensemble des modules 10.

Lorsque le procédé de configuration comprend l'étape de simulation 240, le module de simulation 34 permet de tester la capacité de détection du module additionnel de détection 14 au préalable d'une intégration du module 14 dans le système de détection 4. Cela permet par exemple le débogage du module 14 avant toute intégration dans le système de détection 4.

Lorsque le procédé de configuration comprend l'étape de décompression 250, le procédé permet d'analyser, par le module additionnel de détection 14, mais aussi par les autres modules 10, l'analyse de flux compressés de l'ensemble de flux de communication F.

Lorsque le procédé de configuration comprend l'étape de déchiffrage 260, le procédé permet d'analyser, par le module additionnel de détection 14, mais aussi par les autres modules 10, l'analyse de flux chiffrés de l'ensemble de flux de communication F.

## Revendications

1. Procédé de configuration d'un système de détection d'intrusion (4) dans un réseau de communication (2), le système de détection (4) comprenant une pluralité de modules de détection (10), chaque module de détection (10) étant configuré pour détecter des intrusions dans le réseau de communication (2) selon un protocole de communication spécifique à ce module de détection (10), le procédé de configuration comprenant des étapes de :
- réception (200) d'une grammaire (22) pour un module de détection à ajouter au système de détection (4), dit module additionnel de détection (14), la grammaire (22) définissant un protocole de communication spécifique audit module additionnel de détection (14) et un ensemble de règles de détection d'intrusions pour le module additionnel de détection (14) selon le protocole de communication spécifique audit module additionnel de détection (14) ;
- génération (220), en fonction de la grammaire (22), d'un fichier (28) comprenant ledit protocole de communication spécifique audit module additionnel de détection (14) et ledit ensemble de règles de détection d'intrusions, le ficher (28) se présentant dans un langage de programmation prédéfini par le système de détection (4) et étant distinct de la grammaire (22) ;
- compilation (230) dudit fichier (28) par un compilateur (32), pour obtenir le module additionnel de détection (14) sous forme d'un code exécutable par le système de détection (4) permettant au système de détection (4) de détecter des intrusions dans le réseau de communication (2) selon le protocole de communication spécifique audit module additionnel de détection (14), le compilateur (32) étant apte à compiler uniquement des fichiers dans ledit langage de programmation prédéfini, pour obtenir le code exécutable par le système de détection (4),
le langage de programmation prédéfini étant le langage de programmation Rust.

2. Procédé de configuration selon la revendication 1, comprenant en outre une étape de validation (210) de la grammaire (22) pour le module additionnel de détection (14) comprenant une mise en œuvre d'au moins un test selon des règles prédéterminées.

3. Procédé de configuration selon la revendication 1 ou la revendication 2, comprenant une étape de simulation (240), comprenant une exécution dudit module additionnel de détection (14) par un module de simulation (34) distinct du système de détection (4), l'étape de simulation (240) comprenant en outre une simulation d'une capacité du module additionnel de détection (14) de détecter une intrusion dans le réseau de communication (2), l'étape de simulation (240) comprenant de préférence un affichage d'une défaillance de la capacité de détecter l'intrusion.

4. Procédé de configuration selon l'une quelconque des revendications précédentes, l'étape de réception (200), l'étape de génération (220) et l'étape de compilation (230) étant répétées pour un autre module de détection à ajouter au système de détection (4), distinct dudit module additionnel de détection (14).

5. Procédé de configuration selon l'une quelconque des revendications précédentes, dans lequel la grammaire (22) comprend un ensemble de champs du protocole de communication spécifique au module additionnel de détection (14), chaque champ définissant une caractéristique d'un nœud (8) du réseau de communication (2) et/ou une caractéristique d'un flux de communication (F) parmi un ensemble de flux de communication (F) mis en œuvre par le réseau de communication (2) selon ledit protocole de communication spécifique au module additionnel de détection (14).

6. Procédé de configuration selon la revendication 5, dans lequel le module additionnel de détection (14) comprend un interpréteur apte à détecter des mots prédéfinis à l'intérieur d'une chaîne de caractères de l'un des flux de l'ensemble de flux de communication (F) et/ou
dans lequel le module additionnel de détection (14) comprend un décodeur protocolaire qui est apte à détecter, dans l'ensemble de flux de communication (F), une structure d'échange, par exemple une fréquence et une durée d'échange, et qui est de préférence en outre apte à détecter un contenu prédéterminé dans l'ensemble de flux de communication (F).

7. Procédé de détection (100) d'une intrusion dans un réseau de communication (2) par un système de détection d'intrusion (4) comprenant une pluralité de modules de détection (10), chaque module de détection (10) étant configuré pour détecter des intrusions dans le réseau de communication (2) selon un protocole de communication spécifique à ce module de détection (10), le procédé de détection (100) comprenant :
- une phase de configuration (110) du système de détection (4) comprenant la mise en œuvre du procédé de configuration selon l'une quelconque des revendications précédentes ; et
- une phase d'exploitation (120) comprenant une étape d'analyse (270) par le système de détection (4) d'un ensemble de flux de communication (F) du réseau de communication (2).

8. Procédé de détection selon la revendication 7, dans lequel la phase d'exploitation (120) comprend une étape de déchiffrage (260) d'un flux chiffré parmi l'ensemble de flux de communication (F) pour obtenir un flux déchiffré, et dans lequel l'étape d'analyse (270) comprend l'analyse dudit flux déchiffré par la pluralité de modules de détection (10) et par le module additionnel de détection (14).

9. Procédé de détection selon la revendication 7 ou la revendication 8, dans lequel la phase d'exploitation (120) comprend une étape de décompression (250) d'un flux compressé dudit ensemble de flux de communication (F) pour obtenir un flux décompressé, et dans lequel l'étape d'analyse (270) comprend l'analyse du flux décompressé par la pluralité de modules de détection (10) et par le module additionnel de détection (14).

10. Procédé de détection selon l'une quelconque des revendications 7 à 9, dans lequel la phase d'exploitation (120) comprend une étape de chargement (245), lors de laquelle un module d'interface générique (18) du système de détection (4) charge le module additionnel de détection (14) dans un module d'exécution (16) du système de détection (4) pour une exécution dudit module additionnel de détection (14), en l'absence d'une recompilation la pluralité de modules de détection (10) autres que le module additionnel de détection (14).

11. Architecture de configuration (6) pour un système de détection d'intrusion (4) dans un réseau de communication (2), le système de détection (4) comprenant une pluralité de modules de détection (10), chaque module de détection (10) étant configuré pour détecter des intrusions dans le réseau de communication (2) selon un protocole de communication spécifique à ce module de détection (10), l'architecture de configuration (6) comprenant :
- un module de réception (20) configuré pour recevoir une grammaire (22) pour un module de détection à ajouter au système de détection (4), dit module additionnel de détection (14), la grammaire (22) définissant un protocole de communication spécifique audit module additionnel de détection (14) et un ensemble de règles de détection d'intrusions pour le module additionnel de détection (14) selon le protocole de communication spécifique audit module additionnel de détection (14) ;
- un module de génération (26) configuré pour générer, en fonction de la grammaire (22), un fichier (28) comprenant ledit protocole de communication spécifique audit module additionnel de détection (14) et ledit ensemble de règles de détection d'intrusions, le ficher (28) se présentant dans un langage de programmation prédéfini par le système de détection (4) et étant distinct de la grammaire (22) ;
- un module de compilation (30) comprenant un compilateur (32) configuré pour compiler ledit fichier (28), pour obtenir le module additionnel de détection (14) sous forme d'un code exécutable par le système de détection (4) permettant au système de détection (4) de détecter des intrusions dans le réseau de communication (2) selon le protocole de communication spécifique audit module additionnel de détection (14), le compilateur (32) étant apte à compiler uniquement des fichiers dans ledit langage de programmation prédéfini, pour obtenir le code exécutable par le système de détection (4),
le langage de programmation prédéfini étant le langage de programmation Rust.

12. Ensemble (1) comprenant un système de détection (4) comprenant une pluralité de modules de détection (10), chaque module de détection (10) étant configuré pour détecter des intrusions dans le réseau de communication (2) selon un protocole de communication spécifique à ce module de détection (10), et comprenant une architecture de configuration (6) selon la revendication 11.

## Patentansprüche

1. Konfigurationsverfahren eines Intrusionsdetektionssystems (4) in einem Kommunikationsnetz (2), wobei das Detektionssystem (4) eine Mehrzahl von Detektionsmodulen (10) umfasst, wobei jedes Detektionsmodul (10) dazu konfiguriert ist, Intrusionen in dem Kommunikationsnetz (2) gemäß einem für dieses Detektionsmodul (10) spezifischen Kommunikationsprotokoll zu detektieren, wobei das Konfigurationsverfahren Schritte umfasst des:
- Empfangens (200) einer Grammatik (22) für ein dem Detektionssystem (4) hinzuzufügendes Detektionsmodul, als zusätzliches Detektionsmodul (14) bezeichnet, wobei die Grammatik (22) ein für das genannte zusätzliche Detektionsmodul (14) spezifisches Kommunikationsprotokoll und eine Gesamtheit von Regeln zur Detektion von Intrusionen für das zusätzliche Detektionsmodul (14) gemäß dem für das genannte zusätzliche Detektionsmodul (14) spezifischen Kommunikationsprotokoll definiert;
- Erzeugens (220), in Abhängigkeit von der Grammatik (22), einer Datei (28), die das genannte für das genannte zusätzliche Detektionsmodul (14) spezifische Kommunikationsprotokoll und die genannte Gesamtheit von Regeln zur Detektion von Intrusionen umfasst, wobei die Datei (28) in einer durch das Detektionssystem (4) vordefinierten Programmiersprache vorliegt und von der Grammatik (22) verschieden ist;
- Kompilierens (230) der genannten Datei (28) durch einen Compiler (32), um das zusätzliche Detektionsmodul (14) in Form eines durch das Detektionssystem (4) ausführbaren Codes zu erhalten, der es dem Detektionssystem (4) ermöglicht, Intrusionen in dem Kommunikationsnetz (2) gemäß dem für das genannte zusätzliche Detektionsmodul (14) spezifischen Kommunikationsprotokoll zu detektieren, wobei der Compiler (32) geeignet ist, ausschließlich Dateien in der vordefinierten Programmiersprache zu kompilieren, um den durch das Detektionssystem (4) ausführbaren Code zu erhalten,
wobei die vordefinierte Programmiersprache die Programmiersprache Rust ist.

2. Konfigurationsverfahren nach Anspruch 1, ferner umfassend einen Schritt des Validierens (210) der Grammatik (22) für das zusätzliche Detektionsmodul (14), umfassend eine Implementierung mindestens eines Tests gemäß vorbestimmten Regeln.

3. Konfigurationsverfahren nach Anspruch 1 oder Anspruch 2, umfassend einen Simulationsschritt (240), umfassend eine Ausführung des genannten zusätzlichen Detektionsmoduls (14) durch ein Simulationsmodul (34), das von dem Detektionssystem (4) verschieden ist, wobei der Simulationsschritt (240) ferner eine Simulation einer Fähigkeit des zusätzlichen Detektionsmoduls (14), eine Intrusion in dem Kommunikationsnetz (2) zu detektieren, umfasst, wobei der Simulationsschritt (240) vorzugsweise eine Anzeige eines Versagens der Fähigkeit, die Intrusion zu detektieren, umfasst.

4. Konfigurationsverfahren nach einem beliebigen der vorhergehenden Ansprüche, wobei der Schritt des Empfangens (200), der Schritt des Erzeugens (220) und der Schritt des Kompilierens (230) für ein anderes dem Detektionssystem (4) hinzuzufügendes Detektionsmodul wiederholt werden, das von dem genannten zusätzlichen Detektionsmodul (14) verschieden ist.

5. Konfigurationsverfahren nach einem beliebigen der vorhergehenden Ansprüche, wobei die Grammatik (22) eine Gesamtheit von Feldern des für das zusätzliche Detektionsmodul (14) spezifischen Kommunikationsprotokolls umfasst, wobei jedes Feld ein Merkmal eines Knotens (8) des Kommunikationsnetzes (2) und/oder ein Merkmal eines Kommunikationsflusses (F) aus einer Gesamtheit von Kommunikationsflüssen (F) definiert, die durch das Kommunikationsnetz (2) gemäß dem genannten für das zusätzliche Detektionsmodul (14) spezifischen Kommunikationsprotokoll implementiert werden.

6. Konfigurationsverfahren nach Anspruch 5, wobei das zusätzliche Detektionsmodul (14) einen Interpreter umfasst, der geeignet ist, vordefinierte Wörter innerhalb einer Zeichenkette eines der Flüsse der Gesamtheit von Kommunikationsflüssen (F) zu detektieren, und/oder wobei das zusätzliche Detektionsmodul (14) einen Protokolldecoder umfasst, der geeignet ist, in der Gesamtheit von Kommunikationsflüssen (F) eine Austauschstruktur, beispielsweise eine Frequenz und eine Dauer des Austauschs, zu detektieren, und der vorzugsweise ferner geeignet ist, einen vorbestimmten Inhalt in der Gesamtheit von Kommunikationsflüssen (F) zu detektieren.

7. Detektionsverfahren (100) einer Intrusion in einem Kommunikationsnetz (2) durch ein Intrusionsdetektionssystem (4), das eine Mehrzahl von Detektionsmodulen (10) umfasst, wobei jedes Detektionsmodul (10) dazu konfiguriert ist, Intrusionen in dem Kommunikationsnetz (2) gemäß einem für dieses Detektionsmodul (10) spezifischen Kommunikationsprotokoll zu detektieren, wobei das Detektionsverfahren (100) umfasst:
- eine Konfigurationsphase (110) des Detektionssystems (4), umfassend die Implementierung des Konfigurationsverfahrens nach einem beliebigen der vorhergehenden Ansprüche; und
- eine Betriebsphase (120), umfassend einen Analyseschritt (270) durch das Detektionssystem (4) einer Gesamtheit von Kommunikationsflüssen (F) des Kommunikationsnetzes (2).

8. Detektionsverfahren nach Anspruch 7, wobei die Betriebsphase (120) einen Schritt des Entschlüsselns (260) eines verschlüsselten Flusses aus der Gesamtheit von Kommunikationsflüssen (F) umfasst, um einen entschlüsselten Fluss zu erhalten, und wobei der Analyseschritt (270) die Analyse des genannten entschlüsselten Flusses durch die Mehrzahl von Detektionsmodulen (10) und durch das zusätzliche Detektionsmodul (14) umfasst.

9. Detektionsverfahren nach Anspruch 7 oder Anspruch 8, wobei die Betriebsphase (120) einen Schritt des Dekomprimierens (250) eines komprimierten Flusses der genannten Gesamtheit von Kommunikationsflüssen (F) umfasst, um einen dekomprimierten Fluss zu erhalten, und wobei der Analyseschritt (270) die Analyse des dekomprimierten Flusses durch die Mehrzahl von Detektionsmodulen (10) und durch das zusätzliche Detektionsmodul (14) umfasst.

10. Detektionsverfahren nach einem beliebigen der Ansprüche 7 bis 9, wobei die Betriebsphase (120) einen Schritt des Ladens (245) umfasst, während dessen ein generisches Schnittstellenmodul (18) des Detektionssystems (4) das zusätzliche Detektionsmodul (14) in ein Ausführungsmodul (16) des Detektionssystems (4) für eine Ausführung des genannten zusätzlichen Detektionsmoduls (14) lädt, in Abwesenheit einer Neukompilierung der Mehrzahl von Detektionsmodulen (10), die von dem zusätzlichen Detektionsmodul (14) verschieden sind.

11. Konfigurationsarchitektur (6) für ein Intrusionsdetektionssystem (4) in einem Kommunikationsnetz (2), wobei das Detektionssystem (4) eine Mehrzahl von Detektionsmodulen (10) umfasst, wobei jedes Detektionsmodul (10) dazu konfiguriert ist, Intrusionen in dem Kommunikationsnetz (2) gemäß einem für dieses Detektionsmodul (10) spezifischen Kommunikationsprotokoll zu detektieren, wobei die Konfigurationsarchitektur (6) umfasst:
- ein Empfangsmodul (20), das dazu konfiguriert ist, eine Grammatik (22) für ein dem Detektionssystem (4) hinzuzufügendes Detektionsmodul zu empfangen, als zusätzliches Detektionsmodul (14) bezeichnet, wobei die Grammatik (22) ein für das genannte zusätzliche Detraktionsmodul (14) spezifisches Kommunikationsprotokoll und eine Gesamtheit von Regeln zur Detektion von Intrusionen für das zusätzliche Detektionsmodul (14) gemäß dem für das genannte zusätzliche Detektionsmodul (14) spezifischen Kommunikationsprotokoll definiert;
- ein Erzeugungsmodul (26), das dazu konfiguriert ist, in Abhängigkeit von der Grammatik (22) eine Datei (28) zu erzeugen, die das genannte für das genannte zusätzliche Detektionsmodul (14) spezifische Kommunikationsprotokoll und die genannte Gesamtheit von Regeln zur Detektion von Intrusionen umfasst, wobei die Datei (28) in einer durch das Detektionssystem (4) vordefinierten Programmiersprache vorliegt und von der Grammatik (22) verschieden ist;
- ein Kompilierungsmodul (30), umfassend einen Compiler (32), der dazu konfiguriert ist, die genannte Datei (28) zu kompilieren, um das zusätzliche Detektionsmodul (14) in Form eines durch das Detektionssystem (4) ausführbaren Codes zu erhalten, der es dem Detektionssystem (4) ermöglicht, Intrusionen in dem Kommunikationsnetz (2) gemäß dem für das genannte zusätzliche Detektionsmodul (14) spezifischen Kommunikationsprotokoll zu detektieren, wobei der Compiler (32) geeignet ist, ausschließlich Dateien in der genannten vordefinierten Programmiersprache zu kompilieren, um den durch das Detektionssystem (4) ausführbaren Code zu erhalten,
wobei die vordefinierte Programmiersprache die Programmiersprache Rust ist.

12. Anordnung (1), umfassend ein Detektionssystem (4), das eine Mehrzahl von Detektionsmodulen (10) umfasst, wobei jedes Detektionsmodul (10) dazu konfiguriert ist, Intrusionen in dem Kommunikationsnetz (2) gemäß einem für dieses Detektionsmodul (10) spezifischen Kommunikationsprotokoll zu detektieren, und umfassend eine Konfigurationsarchitektur (6) nach Anspruch 11.

## Claims

1. Configuration method of an intrusion detection system (4) in a communication network (2), the detection system (4) comprising a plurality of detection modules (10), each detection module (10) being configured to detect intrusions in the communication network (2) according to a communication protocol specific to this detection module (10), the configuration method comprising steps of:
- receiving (200) a grammar (22) for a detection module to be added to the detection system (4), called additional detection module (14), the grammar (22) defining a communication protocol specific to said additional detection module (14) and a set of intrusion detection rules for the additional detection module (14) according to the communication protocol specific to said additional detection module (14);
- generation (220), as a function of the grammar (22), of a file (28) comprising said communication protocol specific to said additional detection module (14) and said set of intrusion detection rules, the ficher (28) being in a programming language predefined by the detection system (4) and being distinct from the grammar (22);
- compilation (230) of said file (28) by a compiler (32), to obtain the additional detection module (14) in the form of code executable by the detection system (4) allowing the detection system (4) to detect intrusions in the communication network (2) according to the communication protocol specific to said additional detection module (14), the compiler (32) being able to compile only files in said predefined programming language, to obtain the code executable by the detection system (4),
the predefined programming language being the Rust programming language.

2. Configuration method according to claim 1, further comprising a step of validation (210) of the grammar (22) for the additional detection module (14) comprising an implementation of at least one test according to predetermined rules.

3. Configuration method according to claim 1 or claim 2, comprising a step of simulation (240), comprising an execution of said additional detection module (14) by a simulation module (34) distinct from the detection system (4), the step of simulation (240) further comprising a simulation of a capacity of the additional detection module (14) to detect an intrusion in the communication network (2), the step of simulation (240) preferably comprising a display of a failure of the capacity to detect the intrusion.

4. Configuration method according to any one of the preceding claims, the step of receiving (200), the step of generation (220) and the step of compilation (230) being repeated for another detection module to be added to the detection system (4), distinct from said additional detection module (14).

5. Configuration method according to any one of the preceding claims, in which the grammar (22) comprises a set of fields of the communication protocol specific to the additional detection module (14), each field defining a characteristic of a node (8) of the communication network (2) and/or a characteristic of a communication flow (F) among a set of communication flows (F) implemented by the communication network (2) according to said communication protocol specific to the additional detection module (14).

6. Configuration method according to claim 5, in which the additional detection module (14) comprises an interpreter able to detect predefined words inside a character string of one of the flows of the set of communication flows (F) and/or
in which the additional detection module (14) comprises a protocol decoder which is able to detect, in the set of communication flows (F), an exchange structure, for example a frequency and a duration of exchange, and which is preferably further able to detect a predetermined content in the set of communication flows (F).

7. Detection method (100) of an intrusion in a communication network (2) by an intrusion detection system (4) comprising a plurality of detection modules (10), each detection module (10) being configured to detect intrusions in the communication network (2) according to a communication protocol specific to this detection module (10), the detection method (100) comprising:
- a phase of configuration (110) of the detection system (4) comprising the implementation of the configuration method according to any one of the preceding claims; and
- an operating phase (120) comprising a step of analysis (270) by the detection system (4) of a set of communication flows (F) of the communication network (2).

8. Detection method according to claim 7, in which the operating phase (120) comprises a step of deciphering (260) an encrypted flow among the set of communication flows (F) to obtain a deciphered flow, and in which the step of analysis (270) comprises the analysis of said deciphered flow by the plurality of detection modules (10) and by the additional detection module (14).

9. Detection method according to claim 7 or claim 8, in which the operating phase (120) comprises a step of decompression (250) of a compressed flow of said set of communication flows (F) to obtain a decompressed flow, and in which the step of analysis (270) comprises the analysis of the decompressed flow by the plurality of detection modules (10) and by the additional detection module (14).

10. Detection method according to any one of claims 7 to 9, in which the operating phase (120) comprises a step of loading (245), during which a generic interface module (18) of the detection system (4) loads the additional detection module (14) into an execution module (16) of the detection system (4) for an execution of said additional detection module (14), in the absence of a recompilation the plurality of detection modules (10) other than the additional detection module (14).

11. Configuration architecture (6) for an intrusion detection system (4) in a communication network (2), the detection system (4) comprising a plurality of detection modules (10), each detection module (10) being configured to detect intrusions in the communication network (2) according to a communication protocol specific to this detection module (10), the configuration architecture (6) comprising:
- a receiving module (20) configured to receive a grammar (22) for a detection module to be added to the detection system (4), called additional detection module (14), the grammar (22) defining a communication protocol specific to said additional detection module (14) and a set of intrusion detection rules for the additional detection module (14) according to the communication protocol specific to said additional detection module (14);
- a generation module (26) configured to generate, as a function of the grammar (22), a file (28) comprising said communication protocol specific to said additional detection module (14) and said set of intrusion detection rules, the ficher (28) being in a programming language predefined by the detection system (4) and being distinct from the grammar (22);
- a compilation module (30) comprising a compiler (32) configured to compile said file (28), to obtain the additional detection module (14) in the form of code executable by the detection system (4) allowing the detection system (4) to detect intrusions in the communication network (2) according to the communication protocol specific to said additional detection module (14), the compiler (32) being able to compile only files in said predefined programming language, to obtain the code executable by the detection system (4),
the predefined programming language being the Rust programming language.

12. Assembly (1) comprising a detection system (4) comprising a plurality of detection modules (10), each detection module (10) being configured to detect intrusions in the communication network (2) according to a communication protocol specific to this detection module (10), and comprising a configuration architecture (6) according to claim 11.
